# EUROPÄISCHE PATENTANMELDUNG

(11) **EP 4 822 198 A1**
(43) Veröffentlichungstag der Anmeldung: **14.10.2026**
(21) Anmeldenummer: 26405002.2
(22) Anmeldetag: 31.03.2026
(51) Int. Cl.: F16C 17/10, F16C 25/02, F16C 33/04, F16C 33/20, F16C 43/02

(54) **DREHVERBINDUNG AUF GLEITLAGERBASIS BAUFORM M-V**

(30) Priorität: 07.04.2025 CH 3502025
(71) Anmelder: Gehring, Rudolf, 9315 Neukirch (CH)
(72) Erfinder: Gehring, Rudolf, 9315 Neukirch (CH)

(57) **Zusammenfassung**

Die vorliegende Erfindung betrifft ein Drehverbindungs-Lager auf Gleitlagerbasis mit den Funktionseinheiten Innengring (1), Aussenring (2) und Gleitkörpern (3) als Lagerkomponenten mit je einer konischen Lauffläche in den beiden axialen Richtungen. Das Lager enthält ein Federsystem (4) zum spielfreien Vorspannen. Der Ausssenring (2) ist axial geteilt. Sein stabiler oberer Teil (2b) dient gleichzeitig als tragender Lagerring und als formstabiler Strukturring zum Übertragen und regelmässigen Verteilen der Federkräfte auf die Gleitkörper (3). Eine bevorzugte Ausführung enthält zudem Verbindungshülsen (6), welche die beiden Aussenringteile (2a, 2b) miteinander verbinden und gleichzeitig den Hub des oberen Aussenringteiles (2a) begrenzen. Die Herstellung ist sehr wirtschaftlich und die Montage einfach.

## Beschreibung

### TECHNISCHES GEBIET

Die vorliegende Erfindung betrifft ein Drehverbindungs-Lager auf Gleitlagerbasis mit den Funktionseinheiten Innengring, Aussenring und Gleitkörpern als Lagerkomponenten mit je einer konischen Gleitfläche in den beiden axialen Richtungen.

### STAND DER TECHNIK

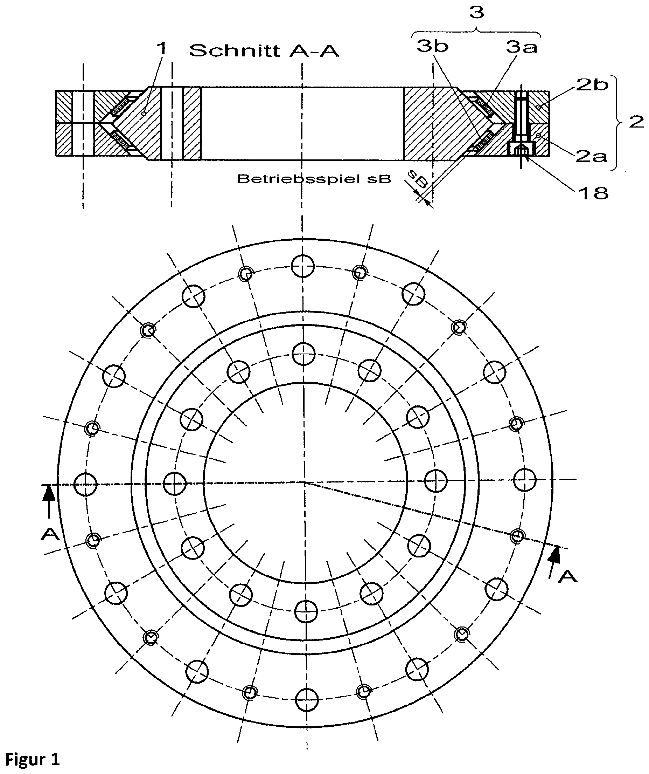

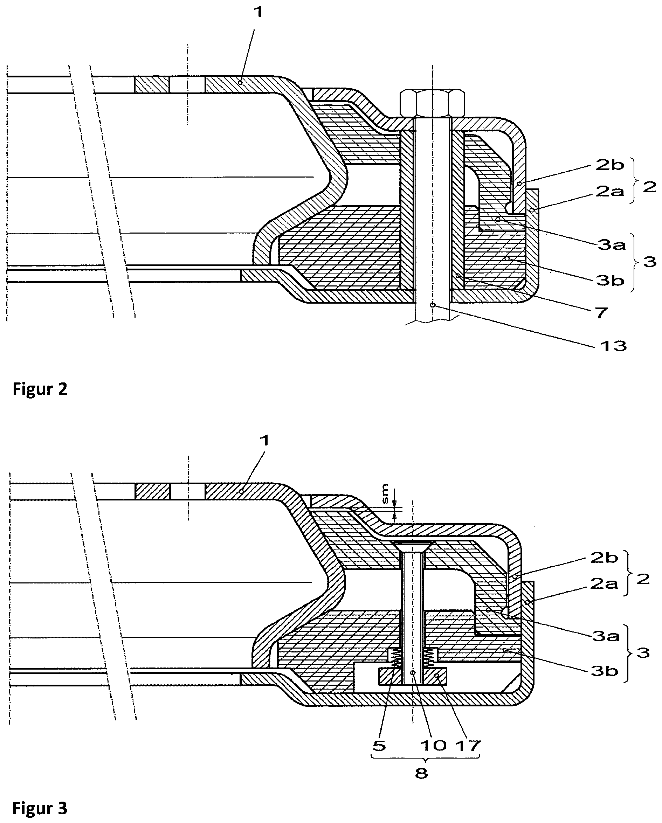

Drehverbindungs-Lager mit Gleitkörpern mit konischen Gleitflächen als Lagerkomponenten werden als Lager mit massiven Ringen wie auch in Leichtbauweise mit spanlos umgeformten Ringen aus Metallblech ausgeführt. Drehverbindungs-Lager werden nachfolgend entsprechend der branchenüblichen Terminologie kurz als Drehverbindungen bezeichnet. Drehverbindungen auf Gleitlagerbasis als Gleit-Drehverbindungen. Drehverbindungen sind eine Drehlagerart mit grossem Lagerdurchmesser und im Vergleich dazu kleinen Lagerquerschnitten. Typischerweise haben sie mittlere Durchmesser von 400 mm bis 1000 mm und eine axiale Bauhöhe von etwa 60 mm, welche jeweils bei einem Lagertyp über den gesamten Durchmesserbereich konstant ist. Ein weiterer Unterschied von Drehverbindungen zu normalen Axial-/Radiallagern besteht darin, dass Aussen- und Innenringe mit Löchern zur Aufnahme von Schrauben zum Befestigen der Ringe an den Anschlussteilen versehen sind, während normale Lager Ringe ohne Löcher aufweisen und deshalb durch Einpressen oder durch Befestigungsringe mit den Anschlussteilen verbunden werden müssen. Gleit-Drehverbindungen, welche Kräfte in beiden axialen Richtungen sowie Radialkräfte und Momente aufnehmen können, werden unter anderem als M/V-Ausführungen gebaut. Diese bestehen aus einem einteiligen Ring mit 2 konischen Lagerflächen, welche so angeordnet sind, dass ihr Querschnitt ein V darstellt, einem zweiteiligen, axial geteilten Ring, bei welchem die beiden Teile zusammen eine M-Form bilden und dazwischen liegenden Gleitkörpern. Im Querschnitt des gesamten Lagers umschliesst das "M" des einen Ringes das "V" des Gegenringes. Neuere Gleit-Drehverbindungen sind meist mit wartungsarmen oder wartungsfreien Gleitbelägen oder Gleitelementen ausgerüstet. Gleitelement ist hierbei die Bezeichnung eines Bauteils aufgrund seiner Funktion unabhängig von seiner körperlichen Form. Eine solche Ausführung ist in der Deutschen Offenlegungsschrift Nummer 26 48 118 beschrieben. Der prinzipielle Aufbau dieser Drehverbindungen ist in Figur 1 dargestellt. Neben den Bohrungen in den Ringen zum Befestigen an der Anschlusskonstruktion braucht es bei dieser Ausführung Schrauben zum Verbinden der beiden Aussenringteile. Ein Hauptnachteil dieser Ausführungen besteht darin, dass sie zwangsläufig spielbehaftet sind. Dadurch ist einesteils die Führungsgenauigkeit eingeschränkt und andernteils ergeben sich bei dynamischen Belastungen Vibrationen und Schläge, welche die Lebensdauer der Lager erheblich reduzieren. Diese Art von Drehverbindung wird deshalb nur erwähnt, um den grösseren Zusammenhang aufzuzeigen; die "Lagerfamilie", zu welcher die erfindungsgemässe Drehverbindung gehört. Um den vorerwähnten Nachteil zu beheben, wurden spielfreie Ausführungen konzipiert. Solche Drehverbindungen weisen ein Federsystem zum Vorspannen des Lagers auf. Relevant bezüglich der aktuellen Erfindung sind deshalb nur Ausführungen mit spielfrei vorgespanntem Lagersystem. Sie sind bisher nur in der Leichtbauweise mit spanlos umgeformten Ringen bekannt. Eine solche ist in der EP 2 913 544 des Anmelders beschrieben. Die Gleitelemente dieser Drehverbindung sind räumliche Ringsegmente mit komplizierten Formen. Sie können entweder als Spritzteile hergestellt oder aus Platten-Halbzeug mittels aufwendiger spanender Bearbeitung erzeugt werden. Rationell können sie deshalb nur als Spritzteile hergestellt werden, wozu es teure Spritzformen braucht. Diese Bauart eignet sich deshalb nur für Grossserien. Zum Aufheben des Spiels und zum Aufbringen einer Vorspannung oder einer Dämpfungskraft werden bei dieser Ausführung zusätzlich zu den Befestigungsschrauben unabhängige Schrauben für das Spannen der Federn benötigt. Weil die Gleitelemente aus Kunststoff und deshalb biegeelastisch sind, braucht es dazu eine grosse Anzahl Federn respektive Vorspannsysteme, um eine regelmässige Kraftverteilung zu ermöglichen. Dadurch ergeben sich hohe Herstell- und vor allem Montagekosten, welche zudem bei allen Losgrössen auftreten. Eine solche Drehverbindung ist in den Figuren 2 bis 5 dargestellt.

### DARSTELLUNG DER ERFINDUNG

Ausgehend von diesem Stand der Technik liegt der Erfindung die Aufgabe zugrunde, die vorgängig beschriebenen Nachteile der bekannten Drehverbindungen auf Gleitlagerbasis zu beseitigen, insbesondere eine Ausführung zu gestalten, welche ebenfalls spielfrei ist, aber geringe Modell-und Formkosten bedingt und eine einfache Montage ermöglicht, sodass sich besonders bei kleinen Stückzahlen eine kostengünstige Herstellung ergibt.

Dies wird erfindungsgemäss dadurch erreicht, dass der Aussenring-Oberteil so gestaltet ist, dass er in einer Doppelfunktion gleichzeitig als Lagerring sowie als formstabiler Strukturring zur Übertragung der Federkräfte auf die Gleitkörper dient. Eine Variante dieser Ausführung weist zudem ein multifunktionelles Federsystem auf, welches das Lager bis zum Einbau als kompakte Baugruppe zusammenhält, beim Einbau des Lagers mit den Befestigungsschrauben gleichzeitig das Lager vorspannt und zusätzlich als Hubbegrenzung für den Federweg dient, wenn die Betriebsbelastungen in Abheberichtung die Vorspannkraft überschreiten. In einer Ausführungsform besteht zudem der Gleitkörper aus Kegelstumpf-Mantelsegmenten konstanter Wandstärke, welche aus handelsüblichen Gleitplatten materialsparend ausgeschnitten und dann in die definitive Form durch walzen oder pressen gerundet sind.

### KURZE BESCHREIBUNG DER ZEICHNUNGEN

Bevorzugte Ausführungsformen der Erfindung werden im Folgenden anhand der Zeichnungen beschrieben, welche lediglich zur Erklärung dienen und nicht einschränkend auszulegen sind. In den Zeichnungen zeigen:
- Figur 1: Eine ganz einfache Ausführung einer bekannten Drehverbindung mit Betriebsspiel in einer Querschnittsansicht und einer Draufsicht.
- Figur 2: Eine axiale Querschnittsansicht durch die Distanzhülsen einer Gleit-Drehverbindung nach EP 2 913 544.
- Figur 3: Eine axiale Querschnittsansicht durch das Vorspannsystem einer Gleit-Drehverbindung nach EP 2 913 544.
- Figur 4: Je eine Ansicht von oben und von unten auf die Gleitsegmente einer Gleit-Drehverbindung nach EP 2 913 544.
- Figur 5: Eine Querschnittsansicht durch einen Vorspannbolzen einer Gleit-Drehverbindung nach EP 2 913 544.
- Figur 6: Eine Querschnittsansicht durch ein Federsystem einer erfindungsgemässen Gleit-Drehverbindung
- Figur 7: Eine Detail-Querschnittsansicht durch ein Federsystem einer erfindungsgemässen Gleit-Drehverbindung im nicht eingebauten Zustand.
- Figur 8: Eine Detail-Querschnittsansicht durch ein Federsystem einer erfindungsgemässen Gleit-Drehverbindung im eingebauten Zustand.
- Figur 9: Eine Schnittmusterzeichnung, welche die materialsparende Anordnung der Gleitsegment-Zuschnitte in einer handelsüblichen Gleitplatte darstellt.
- Figur 10: Eine 3D-Ansicht eines kompletten oberen Gleitringes 3a.

### BESCHREIBUNG BEVORZUGTER AUSFÜHRUNGSFORMEN

Figur 1 zeigt eine bekannte Ausführungsform der im Prinzip einfachsten Ausführung einer Gleit-Drehverbindung in M/V-Bauform. Gleiche beziehungsweise ähnliche Merkmale sind in allen Figuren mit gleichen oder ähnlichen Bezugszeichen gekennzeichnet; unabhängig davon, ob das Merkmal aus dem Stand der Technik bekannt oder mit der Erfindung hinzugetreten ist. Diese Drehverbindung besteht aus dem Innenring 1, dem Aussenring 2 bestehend aus dem Aussenring-Unterteil 2a und dem Aussenring-Oberteil 2b, dem Gleitkörper 3 bestehend aus dem oberen Gleitring 3a und dem unteren Gleitring 3b sowie den Verbindungsschrauben 18. Im Schnitt A-A (obere Figur) sieht man im Aussenring 2 links die Durchgangslöcher zur Befestigung der Drehverbindung an der Anschlusskonstruktion und rechts die Verbindungsschrauben 18, welche den Aussenring-Unterteil 2a und den Aussenring-Oberteil 2b zusammenhalten. Die Verbindungsschrauben 18 und die dazu notwendigen Bohrungen und Gewinde erhöhen die Herstellkosten. Das Betriebsspiel sB ist vergrössert gezeichnet, um es optisch überhaupt darstellen zu können. Es ist aber für die Funktionsfähigkeit dieses Lagertyps zwingend notwendig und hat die bereits im Kapitel "Technischer Stand" beschriebenen Nachteile: es reduziert die Führungsgenauigkeit und führt bei dynamischen Belastungen zu Vibrationen und Schlägen und damit zu einer erheblichen Reduktion der Lebensdauer. Diese Ausführung ist deshalb nur für Anwendungen mit geringen Anforderungen geeignet. Sie wird, wie ebenfalls bereits aufgeführt, nur erwähnt, um den grösseren Rahmen aufzuzeigen, in welchem die erfindungsgemässe Drehverbindung zu sehen ist.

**Figur 2** zeigt eine axiale Querschnittsansicht durch die Distanzhülsen 7 einer Gleit-Drehverbindung in Lichtbauweise nach EP 2 913 544. Innenring 1 und Aussenring 2 sind hier durch metalldrücken spanlos umgeformte Ringe. Die Gleitkörper 3 sind dreidimensionale Komponenten mit relativ komplexen Formen, bestehend aus dem oberen Gleitring 3a und unteren Gleitring 3b. Die Distanzhülsen 7 dienen dazu, dass beim Befestigen der Drehverbindung mittels der Befestigungsschrauben 13 an der Anschlusskonstruktion keine Kräfte auf den Gleitkörper 3 übertragen werden. Die komplexen Formen der Gleitkörper 3 bedingen entweder teure Spritzformen oder eine aufwendige spanende Bearbeitung. Diese Bauform ist allein schon aus diesem Grund für kleine Losgrössen nicht geeignet.

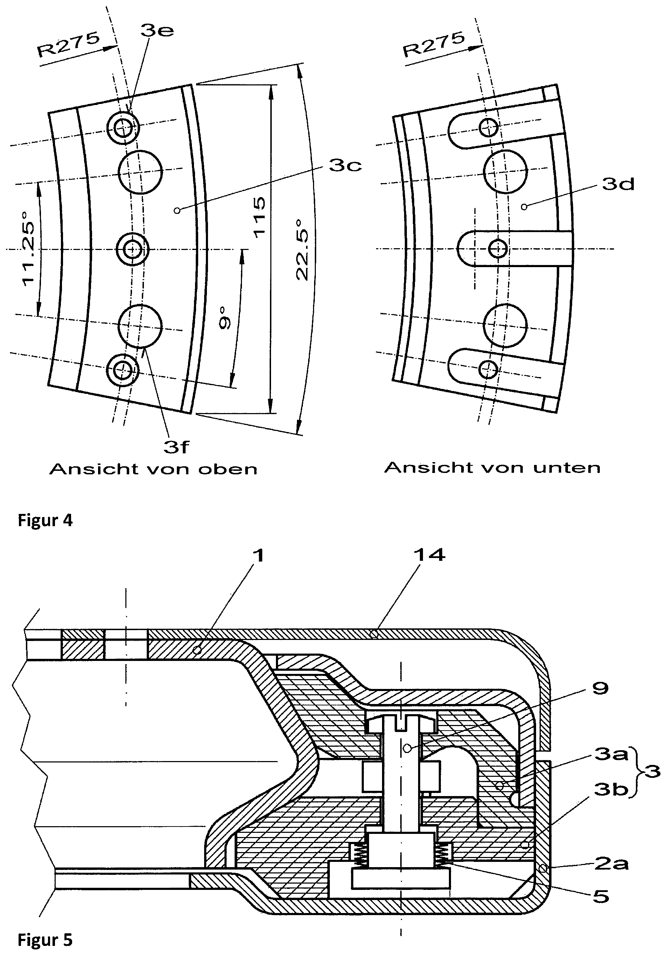

**Figur 3** zeigt eine axiale Querschnittsansicht durch das Vorspannsystem 8 der gleichen Gleit-Drehverbindung nach EP 2 913 544. Dieses Vorspannsystem 8 besteht aus den Federn 5, der Vorspannschraube 10 und der Spezial-Mutter 17. Es verbindet den oberen Gleitring 3a mit dem unteren Gleitring 3b und fixiert diese unter Vorspannung auf dem Innenring 1. Die Gleitringe 3a und 3b bestehen jeweils aus mehreren Gleitsegmenten 3c, 3d (Figur 4). Infolge der Form des unteren Gleitringes 3b wird eine Spezial-Mutter 17 benötigt. Die Vorspannkraft muss über das Anziehdrehmoment der Vorspannschrauben 10 gesteuert werden. Das Federsystem 8 kann nur montiert werden, wenn der Aussenring 2 noch nicht angebracht ist. Zum Zusammenbau der Gleitkörper 3 mit dem Innenring 1 braucht es deshalb Montage-Hilfsmittel und die Montage ist sehr aufwendig. Auch nach dem Anfügen des Aussenringes 2 ist diese Drehverbindung noch keine verbundene, kompakte Baugruppe. Erst beim Anbau der lose zusammengestellten Teile mittels der Befestigungsschrauben 13 (Figur2) an die Anschlusskonstruktion werden der Aussenring-Unterteil 2a und der Aussenring-Oberteil 2b miteinander verbunden. Weil der Gleitkörper 3 aus Kunststoff und elastisch ist, braucht es pro Gleitsegment oben 3c respektive Gleitsegment unten 3d (Figur 4) mehrere Vorspannsysteme 8, um eine gleichmässige Verteilung der Vorspannkraft zu erreichen. Dies wird nachfolgend in Figur 4 gezeigt. Zudem neigt der Kunststoff zum Kriechen, wodurch die Vorspannkraft über längere Zeit reduziert wird.

**Figur 4** zeigt links eine Draufsicht auf ein einzelnes Gleitsegment oben 3c und rechts eine Ansicht von unten auf das Gleitsegment unten 3d dieser Gleit-Drehverbindung nach EP 2 913 544. Mit oberer Gleitring 3a respektive unterer Gleitring 3b wird jeweils ein kompletter Ring bezeichnet, welcher aus mehreren Gleitsegmenten (3c, 3d) gebildet wird. Jedes Gleitsegment 3c respektive 3d weist 2 Bohrungen 3f für die Befestigungsschrauben 13 (Figur 2) und 3 Bohrungen 3e für die Vorspannschrauben 10 (Figur 3) auf. Diese vielen Komponenten und der hohe Montageaufwand tragen ebenfalls dazu bei, dass diese Drehverbindung unabhängig von den Seriegrössen teuer wird.

**Figur 5** zeigt eine Querschnittsansicht durch einen Vorspannbolzen 9 einer Gleit-Drehverbindung nach EP 2 913 544. Um die Montage gegenüber der Ausführung nach den Figuren 2 bis 4 etwas zu vereinfachen, werden hier Vorspannschraube 10 und Spezial-Mutter 17 durch einen Vorspannbolzen 9 ersetzt. Dieser ist als eine Art zweistufiger Bajonettverschluss aufgebaut. Dadurch wird zwar die Montage etwas vereinfacht, aber der Vorspannbolzen 9 ist ein komplexes Teil, das nur als KunststoffSpritzteil oder als Druckguss-Teil rationell hergestellt werden kann und auch die Form des Gleitsegments oben 3c (Figur 4) wird zusätzlich komplizierter. Diese Ausführung ist deshalb noch mehr als die Ausführung gemäss den Figuren 2 bis 4 nur für sehr grosse Serien geeignet. In dieser Figur wird beispielhaft auch eine Schutzhaube 14 gezeigt. Diese dient dem Schutz des Lagers vor Verschmutzung. Sie vereinfacht auch die Reinigung des Lagers, kann aber abhängig von den Einsatzbedingungen bei allen gezeigten Ausführungen angebracht werden.

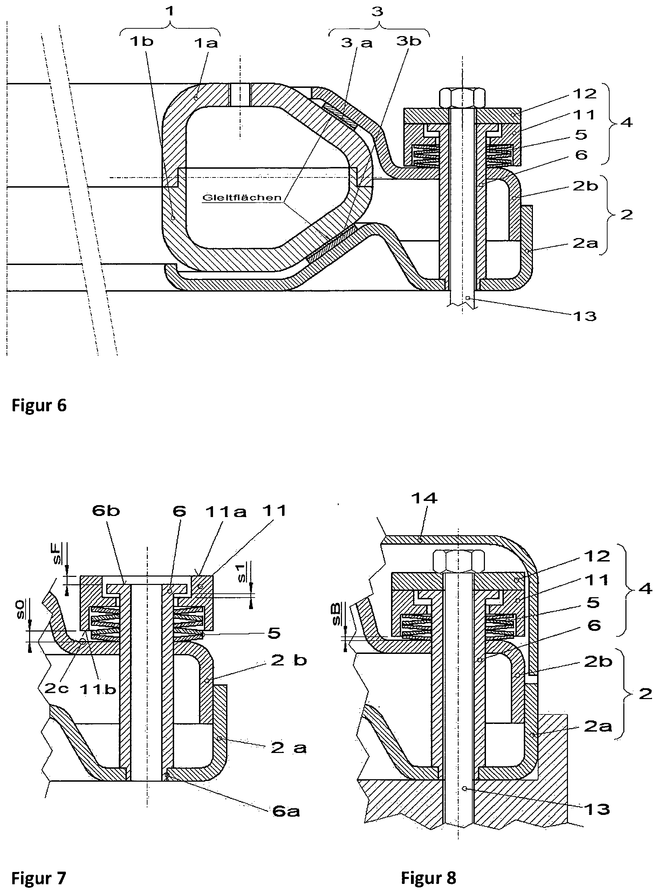

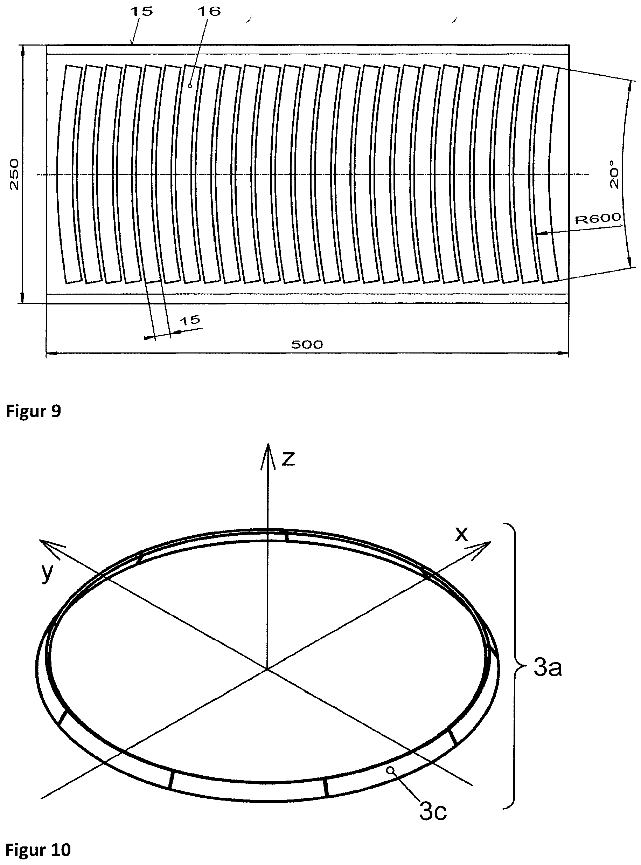

**Figur 6** zeigt eine Querschnittsansicht durch das Federsystem 4 einer erfindungsgemässen Gleit-Drehverbindung nach dem Anbau an die Auflagefläche der Anschlusskonstruktion. Innenring 1 und Aussenring 2 sind hier wie bei der Gleit-Drehverbindung nach EP 2 913 544 aus gedrücktem Metallblech. Der obere Gleitring 3 a und der untere Gleitring 3b des Gleitkörpers 3 sind ganz einfache Kegelstumpf-Mantelsegmente konstanter Wandstärke (siehe Figur 10). Diese sind viel einfacher und billiger herzustellen als die Gleitkörper 3 gemäss den bekannten Drehverbindungen nach den Figuren 2 bis 5, weil dazu weder teure Spritzformen noch eine aufwendige spanende Bearbeitung notwendig sind. Das ist einer der Gründe, wieso die erfindungsgemässe Drehverbindung günstiger ist als die Ausführungen gemäss den Figuren 2 bis 5. Der entscheidende, technische Vorteil gegenüber diesen bekannten Drehverbindungen liegt aber in der Art der Kraftübertragung vom Federsystem 4 auf den Gleitkörper 3. Der formstabile Aussenring Oberteil 2b dient gleichzeitig sowohl als tragender Lagerring wie als formstabiler Strukturring zur Übertragung der Vorspannkraft der Federn 5 auf den Gleitkörper 3. Dank dem stabilen Aussenring Oberteil 2b wird mit wenigen Federsystemen 4 eine gleichmässige Verteilung der Kräfte auf den gesamten Gleitkörper 3 erreicht. Das Federsystem 4 besteht aus der Feder 5, der Verbindungshülse 6, dem Druckring 11 und der Druckscheibe 12. Die Verbindungshülse 6 hat zudem eine Mehrfachunktion:
Sie verbindet den Aussenring-Unterteil 2a mit dem Aussenring Oberteil 2b, führt die Federn 5 sowie den Druckring 11 und begrenzt den Verschiebeweg des Aussenring-Oberteils 2b im Betrieb. Diese Funktionen sind in den Figuren 7 und 8 genauer beschrieben. Erfindungsgemässe Ausführungen mit diesem Federsystem 4 bieten nochmals erhebliche kostenmässige und technische Vorteile gegenüber den bekannten Drehverbindungen. Für Anwendungen mit extrem kleinen Stückzahlen, bei denen Formkosten eine entscheidende Rolle spielen, können der Innenring 1 und / oder der Aussenring 2 auch als massive Komponenten wie in Figur 1 ausgeführt werden. Wenn dabei zusätzlich ein geringes Gewicht gefordert wird, können sowohl der Innenring 1 wie der Aussenring 2 aus Aluminiumlegierungen sein. Dabei bilden zum Beispiel harteloxierte Oberflächen verschleissfeste Gleitflächen. Auch die Varianten mit Ringen aus gedrücktem Metallblech können mit Innenringen 1 oder Aussenringen 2 aus Aluminiumlegierungen ausgeführt werden. Die Kombination von spanlos aus Metallblech umgeformten Ringen und Leichtmetall als Werkstoff ergibt extrem leichte und zudem korrosionssichere Drehverbindungen.

**Figur 7** zeigt eine Querschnittsansicht durch das Federsystem 4 im nicht eingebauten Zustand der Drehverbindung (Detail aus Figur6). Alle Komponenten der Drehverbindung sind zusammengesetzt. Bereits für die Lagerhaltung, den Transport und das Handling ist diese erfindungsgemässe Drehverbindung deshalb eine in sich geschlossene Baugruppe. Dies bietet einige Vorteile gegenüber der bekannten Drehverbindung nach EP 2 913 544, die erst beim Anbau an die Anschlusskonstruktion mittels der Befestigungsschrauben 13 zusammenhält. Aussenring-Oberteil 2b, Aussenring-Unterteil 2a, die Federn 5 und der Druckring 11 sind durch die Verbindungshülse 6 verbunden. In diesem Zustand wirken praktisch keine Kräfte auf die verschiedenen Einzelteile. Deshalb genügt eine leichte Verbindung zwischen der Fixierpartie 6a der Verbindungshülse 6 und dem Aussenring-Unterteil 2a. Dies kann zum Beispiel durch Rändrieren der Fixierpartie 6a und anschliessendes leichtes Einpressen oder durch Einkleben erreicht werden. Der Druckring 11 liegt lose unter Eigengewicht auf den Federn 5 auf. Zwischen der Anschlagpartie 6b der Verbindungshülse 6 und der oberen Stirnfläche 11a des Druckringes 11 ist der Abstand sF. Dieser ist kleiner als der Abstand s0 zwischen der unteren Stirnfläche 11b des Druckringes 11 und der Grenzfläche 2c des Aussenring-Oberteils 2 b. Der Abstand sF bestimmt den Spannweg der Federn 5 und damit die Vorspannkraft auf den Gleitkörper 3 beim Einschrauben der Befestigungsschrauben 13 (Figur 8) in die Anschlusskonstruktion.

**Figur 8** zeigt eine Querschnittsansicht durch das gleiche Federsystem 4 im eingebauten Zustand, das heisst nachdem die Drehverbindung mittels der Befestigungsschrauben 13 an die tragende Anschlusskostruktion festgeschraubt ist. Beim Anschrauben wird die Druckscheibe 12 auf die Anschlagpartie 6b (Figur 7) der Verbindungshülse 6 gepresst. Dabei werden die Federn 5 um den Abstand sF gespannt. Zwischen der unteren Stirnfläche 11b und der Grenzfläche 2c des Aussenring-Oberteils 2b bleibt der maximale Verschiebeweg sB des Aussenring-Oberteils 2b, wenn die Abhebekraft auf das Lager im Betrieb grösser ist als die Vorspannkraft aller Federn 5. In dieser Figur wird auch noch eine Schutzhaube 14 gezeigt (Kommentar siehe Figur 5). Diese Art der gleichzeitigen Befestigung des Lagers an der Anschlusskontruktion und dem Aufbringen der Vorspannkraft mit geometrisch bestimmter Vorspannkraft und ebenfalls geometrisch bestimmter maximaler Feder-Zusatzkraft erleichtert die Montage ganz erheblich und bewirkt damit viel tiefere Gesamtkosten der Drehverbindung gegenüber den bekannten Ausführungen.

**Figur 9** ist eine Schnittmusterzeichnung, welche die materialsparende Anordnung von Gleitsegment Zuschnitten 16 in einer handelsüblichen Gleitplatte 15 zeigt. Die eingetragenen Masse stellen einesteils handelsübliche Abmessungen von Gleitplatten 15 dar und andernteils typische Abmessungen von Gleitsegment-Zuschnitten 16 am Beispiel von Gleitsegmenten oben 3c. Geeignete Arten von Gleitplatten 15 sind zum Beispiel Platten aus Verbundmaterial mit einem Metallrücken und einer fest damit verbundenen Gleitschicht, welche üblicherweise reibungsarme Kunststoffe als Gleitpartner enthält. Solche Verbundplatten verbinden mehrere Eigenschaften, welche für diese Anwendung vorteilhaft sind. Sie ermöglichen ein ganz einfaches Ausschneiden der Gleitsegment-Zuschnitte 16. Je nach Stückzahl erfolgt dies zum Beispiel durch Wasserstrahlschneiden bei kleinen oder durch Stanzen bei grossen Stückzahlen. Dank dem Metallrücken können sie mit einfachen Verfahren zu Gleitsegmenten (z.B. Gleitsegment oben 3c) gerundet und zum Beispiel durch kleben im Aussenring 2 befestigt werden. Sie sind auch je nach Einsatzgebiet in rostfreien oder lebensmitteltauglichen Ausführungen erhältlich. Um die handelsüblich gegebenen Abmessungen voll ausnützen zu können, kann die Anzahl der Gleitsegmente (3c, 3d) pro Gleitkörper 3 der Lagergrösse angepasst werden. Die Gleitsegmente 3c, 3d können aber auch aus anderen Ausgangsmaterialien hergestellt, zum Beispiel aus reinen Kunststoffplatten ausgeschnitten und nachträglich gerundet oder direkt als einbaufertige Teile durch Spritzgiessen erzeugt werden.

**Figur 10** ist eine 3D-Ansicht eines kompletten oberen Gleitringes 3a. Sie zeigt die einfache Form eines Gleitringes 3a. Alle (im Beispiel 9) Gleitsegmente 3c bilden zusammen den oberen Gleitring 3a in Form eines Kegelstumpf-Mantels. Die einzelnen Gleitsegmente oben 3c werden ganz einfach aus den Gleitsegment-Zuschnitten 16 durch pressen oder konisch walzen gebildet.

### BEZUGSZEICHENLISTE

- 1: Innenring
- 1a: Innenring-Oberteil
- 1b: Inening-Unterteil
- 2: Aussenring
- 2a: Aussenring-Unterteil
- 2b: Aussenring-Oberteil
- 2c: Grenzfläche
- 3: Gleitkörper
- 3a: Oberer Gleitring
- 3b: Unterer Gleitring
- 3c: Gleitsegment oben
- 3d: Gleitsegment unten
- 3e: Bohrungen für Vorspannschrauben
- 3f: Bohrungen für Befestigungsschrauben
- 4: Federsystem
- 5: Federn
- 6: Verbindungshülse
- 6a: Fixierpartie
- 6b: Anschlagpartie
- 7: Distanzhülse
- 8: Vorspannsystem
- 9: Vorspannbolzen
- 10: Vorspannschraube
- 11: Druckring
- 11a: Obere Stirnfläche
- 11b: Untere Stirnfläche
- 12: Druckscheibe
- 13: Befestigungsschraube
- 14: Schutzhaube
- 15: Gleitplatte
- 16: Gleitsegment-Zuschnitt
- 17: Spezial-Mutter
- 18: Verbindungsschraube

## Patentansprüche

1. Drehverbindungs-Lager auf Gleitlager-Basis mit den Funktionseinheiten Innenring (1), Aussenring (2), Gleitkörper (3) aus je einem Gleitring mit konischer Gleitfläche (3a, 3b) in beiden axialen Belastungsrichtung und einem Federsystem (4) zum spielfreien Vorspannen des Lagers, **dadurch gekennzeichnet, dass** der Aussenring (2) aus je einem stabilen Aussenring-Unterteil (2a) und einem stabilen Aussenring-Oberteil (2b) besteht, wobei der Aussenring-Oberteil (2b) gleichzeitig als tragender Lagerring und als Übertragungselement der Federkräfte von den Federn (5) auf den Gleitkörper (3) dient.

2. Drehverbindungs-Lager mit einem Federsystem (4) nach Anspruch 1, **dadurch gekennzeichnet, dass** das Federsystem (4) mindestens aus den Federn (5), einer Verbindungshülse (6), welche den Aussenring-Unterteil (2a) und den Aussenring-Oberteil (2b) fest miteinander verbindet sowie gleichzeitig als Hubbegrenzung für den Aussenring-Oberteil (2b) dient und einem Druckring (11) besteht, welcher die Kraft der Befestigungsschrauben (13) auf die Federn (5) überträgt.

3. Drehverbindungs-Lager nach den Ansprüchen 1 und 2 , **dadurch gekennzeichnet, dass** jeder Gleitkörper (3) aus einem oberen Gleitring (3a) und einem unteren Gleitring (3b) besteht und jeder Gleitring (3a, 3b) aus mehreren Gleitsegmenten (3c, 3d).

4. Drehverbindungs-Lager nach den Ansprüchen 1 bis 3, **dadurch gekennzeichnet, dass** jeder Gleitring (3a, 3b) die Form eines Kegelstumpf-Mantels mit konstanter Wandstärke aufweist.
